# EUROPÄISCHE PATENTANMELDUNG

(11) **EP 1 767 391 A2**
(43) Veröffentlichungstag der Anmeldung: **28.03.2007**
(21) Anmeldenummer: 06017498.4
(22) Anmeldetag: 23.08.2006
(51) Int. Cl.: B60J 7/22, B60N 3/00

(54) **Windschott für ein Cabriolet-Fahrzeug sowie Cabriolet-Fahrzeug mit einem solchen Windschott**

(30) Priorität: 26.09.2005 DE 102005045883
(71) Anmelder: Wilhelm Karmann GmbH, 49084 Osnabrück (DE)
(72) Erfinder: Böhnke, Achim, 49545 Tecklenburg (DE); Trost, Daniel, 49086 Osnabrück (DE); Schauwecker, Herbert, 49086 Osnabrück (DE); Liepe, Holger, 49205 Hasbergen (DE); Moritz, Oliver, 49170 Hagen a.T.W. (DE); Hellmich, Rudolf, 49196 Bad Laer (DE); van Berkum, Wim, 49179 Ostercappeln (DE)

(57) **Zusammenfassung**

Es wird ein Windschott (14) für ein Cabrioletfahrzeug mit einer zur Befüllung mit einem evakuierbaren Medium vorgesehenen Tragkonstruktion (16) angegeben, bei dem das Windschott (14) und die Tragkonstruktion (16) im nicht aufgestellten Zustand im rückwärtigen Bereich des jeweiligen Vordersitzes (10) des Cabrioletfahrzeugs unterbringbar sind.

## Beschreibung

Die Erfindung betrifft ein Windschott für ein Cabriolet-Fahrzeug gemäß dem Oberbegriff des Anspruchs 1 sowie ein Cabriolet-Fahrzeug mit einem solchen Windschott.

Aus der DE 44 05 707 ist ein Windschott bekannt, dass ebenfalls auf einer zur Befüllung mit einem evakuierbaren Medium vorgesehenen Tragkonstruktion, dort einer aufblasbaren Tragkonstruktion, basiert, indem aufblasbare Aufspannglieder vorgesehen sind, die bei einer hinter den Rückenlehnen über die Karosseriebreite aufspannbaren Querwand (dem wirksamen Teil des Windschotts) an gegenüberliegenden Begrenzungskanten der Querwand angreifen und die aus einem mindestens an der Gürtellinie des Fahrzeugs endenden Führungsschacht beim Aufblasen herausgeschoben und beim Luftablassen wieder in den Führungsschacht eingezogen werden.

Gemäß der Erfindung wird bereits ein vom Stand der Technik abweichender Ansatz verfolgt, indem nämlich die aufblasbare Tragkonstruktion nicht der Fahrzeugkarosserie sondern den Vordersitzen zugeordnet ist.

Nachteilig bei der aus dem Stand der Technik bekannten Lösung ist nämlich vor allem der nicht unerhebliche Platzbedarf für einen quer zur Fahrzeuglängsrichtung angeordneten Kasten zur Aufnahme der aufspannbaren Querwand, der auch den üblichen Raum zwischen den beiden Vordersitzen überdeckt und somit ein Durchreichen des Fahrers oder Beifahrers zu den Fondsitzen erheblich erschwert, wenn nicht gar unmöglich macht.

Der Erfindung liegt daher die Aufgabe zugrunde eine insbesondere im Hinblick auf Platzbedarf optimierte Ausführungsform eines Windschotts mit einer zur Befüllung mit einem evakuierbaren Medium vorgesehenen Tragkonstruktion anzugeben.

Diese Aufgabe wird erfindungsgemäß mit den Merkmalen des Anspruchs 1 gelöst. Dabei zeichnet sich das Windschott für ein Cabrioletfahrzeug mit einer zur Befüllung mit einem evakuierbaren Medium vorgesehenen Tragkonstruktion dadurch aus, dass das Windschott und die Tragkonstruktion im nicht aufgestellten Zustand im rückwärtigen Bereich des jeweiligen Vordersitzes des Cabrioletfahrzeugs untergebracht oder unterbringbar sind.

Der Vorteil der Erfindung besteht zum einen in dem geringen Platzbedarf des Windschotts, das komplett im rückwärtigen Teil des jeweiligen Vordersitzes unterbringbar ist. Ein weiterer Vorteil besteht darin, dass sich das Windschott durch ein in die Tragkonstruktion einleitbares Medium, also zum Beispiel kompressorbeaufschlagte Druckluft, aufstellen lässt, so dass sich für den Fahrer/Beifahrer der Aufwand beim Aufstellen des Windschotts auf die Betätigung eines entsprechenden Tasters/Schalters zur Aktivierung z.B. des Kompressors zum Befüllen oder zum Evakuieren der Tragkonstruktion beschränkt. Die Handhabung ist damit äußerst einfach und erfordert insbesondere kein Verlassen des Fahrzeugs.

Wenn oben oder im Folgenden vom "Aufblasen des Windschotts" oder von der "aufblasbaren Tragkonstruktion" gesprochen wird, meint dies im Sinne der Ausführungen im vorangehenden Absatz stets das Befüllen mit einem in die Tragkonstruktion einleitbaren (und evakuierbaren) Medium, z.B. Druckluft. Andere Medien, evtl. auch verschiedene Medien, sind ebenfalls denkbar und von der Erfindung erfasst.

Die abhängigen Ansprüche sind auf bevorzugte Ausführungsformen der vorliegenden Erfindung gerichtet.

Vorteilhaft sind das Windschott und die Tragkonstruktion im jeweiligen Vordersitz hinter zumindest einer sich beim Aufstellen des Windschotts durch Aufblasen der Tragkonstruktion öffnenden Blende angeordnet. Auf diese Weise ist das Windschott im nicht aufgestellten Zustand komplett hinter der Blende verborgen, was einerseits der optischen Anmutung des Fahrzeuginnenraums zugute kommt, andererseits aber auch das Windschott und die zugehörige Tragkonstruktion vor Beschädigungen etwa durch Fondpassagiere oder im Fondbereich transportierte Ladung schützt.

Gemäß einer ersten bevorzugten Ausführungsform handelt es sich bei der zumindest einen Blende um sich seitlich öffnende Blenden die zumindest im oberen Bereich des jeweiligen Vordersitzes im jeweiligen Kantenbereich, also der Außenkontur folgend, angeordnet sind. Für einzelne stückweise gerade oder im Wesentlichen gerade Abschnitte der jeweiligen Außenkontur des Vordersitzes sind also entsprechende seitlich öffnende Blenden vorgesehen.

Gemäß einer alternativen bevorzugten Ausführungsform handelt es sich bei der zumindest einen Blende um eine eine rückwärtige Verkleidung des jeweiligen Sitzes bildende Blende. Der Vorteil dieser Ausführungsform besteht darin, dass nur eine bewegliche Blende, nämlich die rückwärtige Verkleidung, vorgesehen ist.

Bevorzugt ist vorgesehen, dass die Tragkonstruktion durch eine aus Schläuchen gebildete gitterartige Tragkonstruktion gebildet ist. Diese gitterartige Tragkonstruktion umfasst zumindest einen die Außenkontur des aufgestellten Windschotts bildenden umlaufenden Schlauch sowie jeweils zumindest einen bei aufgestelltem Windschott horizontal und vertikal oder zumindest im wesentlichen horizontal oder vertikal orientierten Schlauch. Diese zumindest zwei letzteren Schläuche verleihen der Tragkonstruktion zusätzliche Steifigkeit.

Vorteilhaft ist in zumindest einzelnen Schläuchen der Tragkonstruktion eine elastische Rückholeinrichtung, insbesondere ein Gummiband, eine Feder oder dergleichen, vorgesehen. Das Einziehen des Windschotts nach Gebrauch erfolgt zunächst durch Evakuieren der Tragkonstruktion. Die Rückholeinrichtung unterstützt dieses Einziehen und verhindert insbesondere das Verklemmen teilevakuierter Schläuche oder Schlauchabschnitte.

Zur Erhöhung der Wirksamkeit des Windschotts ist vorgesehen, dass die Außenkontur des aufgestellten Windschotts im der Fahrzeugseite zugewandten Bereich an die Innenkontur des Fahrzeuginnenraums angepasst ist. Zusätzlich oder alternativ ist vorgesehen, dass die Außenkontur des aufgestellten Windschotts im der Fahrzeugmitte zugewandten Bereich derart gestaltet ist, dass sich mit dem aufgestellten Windschott des Nachbarsitzes in Fahrzeugmitte eine geschlossene oder zumindest annähernd geschlossene Fläche ergibt. Auf diese Weise ist erreicht, dass verwirbelter Fahrtwind nicht oder nicht in einem ein störendes Ausmaß erreichenden Umfang zu den Passagieren auf den Vordersitzen gelangt.

Vorteilhaft ist zum Einleiten und/oder Evakuieren des evakuierbaren Mediums ein insbesondere im jeweiligen Vordersitz angeordneter Kompressor vorgesehen. Bei Anordnung des Kompressors im jeweiligen Vordersitz ergeben sich kürzeste Wege bis zur Tragkonstruktion. Außerdem entfällt der sonst benötigte Raumbedarf an anderer Stelle. Als evakuierbares Medium eignet sich wegen der allgemeinen Verfügbarkeit und des dann nicht benötigten Raumbedarfs für Speicher anderer Medien insbesondere Druckluft.

Die Erfindung betrifft in gleicher Weise auch ein Cabrioletfahrzeug mit einem Windschott mit einzelnen oder mehreren der oben beschriebenen Merkmale.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigt:
- Fig. 1a: in einer Ansicht von vorne eine Gruppe von Vordersitzen,
- Fig. 1b: die Vordersitze in einer Momentaufnahme beim Beginn des Aufstellens eines Windschotts,
- Fig. 2: die Vordersitze mit aufgestelltem Windschott,
- Fig. 3: einen Vordersitz in rückwärtiger Ansicht,
- Fig. 4: den Vordersitz aus Fig. 3 mit sichtbar gemachtem zusammengelegten Windschott und
- Fig. 5: den Vordersitz aus Fig. 3 mit aufgestelltem Windschott.

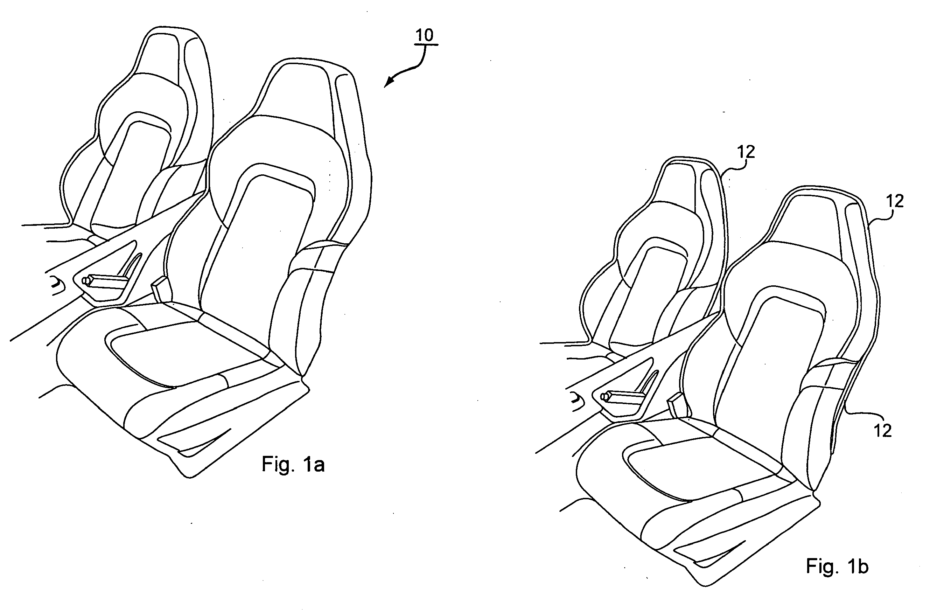

Fig. 1a zeigt in einer Ansicht von vorne eine an sich bekannte Gruppe von Vordersitzen 10 (Fahrer- und Beifahrersitz) wie sie in Kraftfahrzeugen vorgesehen sind. Die gezeigten Vordersitze 10 sind für ein an sich bekanntes, nicht dargestelltes Cabrioletfahrzeug vorgesehen. Jedem Vordersitz 10 ist ein Windschott zugeordnet, das in Fig. 1a nicht erkennbar ist, weil es im eingezogenen Zustand nach Gebrauch komplett im rückwärtigen Teil des jeweiligen Vordersitzes aufgenommen wird.

Fig. 1b zeigt in gleicher Perspektive wie Fig. 1b die Vordersitze 10 in einer Momentaufnahme beim Beginn des Aufstellens des Windschotts. Wie bereits erwähnt ist das eingezogene Windschott im rückwärtigen Teil des jeweiligen Vordersitzes aufgenommen. Dazu ist vorgesehen, dass das Windschott und eine dem Windschott zugeordnete Tragkonstruktion im jeweiligen Vordersitz 10 hinter zumindest einer sich beim Aufstellen des Windschotts durch Aufblasen der Tragkonstruktion öffnenden Blende 12 angeordnet ist. In Fig. 1b ist als Blende 12 eine sich seitlich öffnende Blende dargestellt. Weitere, in der Darstellung in Fig. 1b weniger gut erkennbare Blenden befinden sich entlang der Außenkontur des jeweiligen Vordersitzes 10 zumindest im oberen Bereich des jeweiligen Vordersitzes 10. Für einzelne stückweise gerade oder im wesentlichen gerade Abschnitt der jeweiligen Außenkontur des Vordersitzes sind also entsprechende seitlich öffnende Blenden vorgesehen. Bei einem Vordersitz mit einstückig angeformter Kopfstütze (wie dargestellt) laufen die Blenden auch um die Kopfstütze herum. Bei einem Vordersitz mit separater Kopfstütze laufen die Blenden nur um den Rückenlehnenteil des Vordersitzes herum.

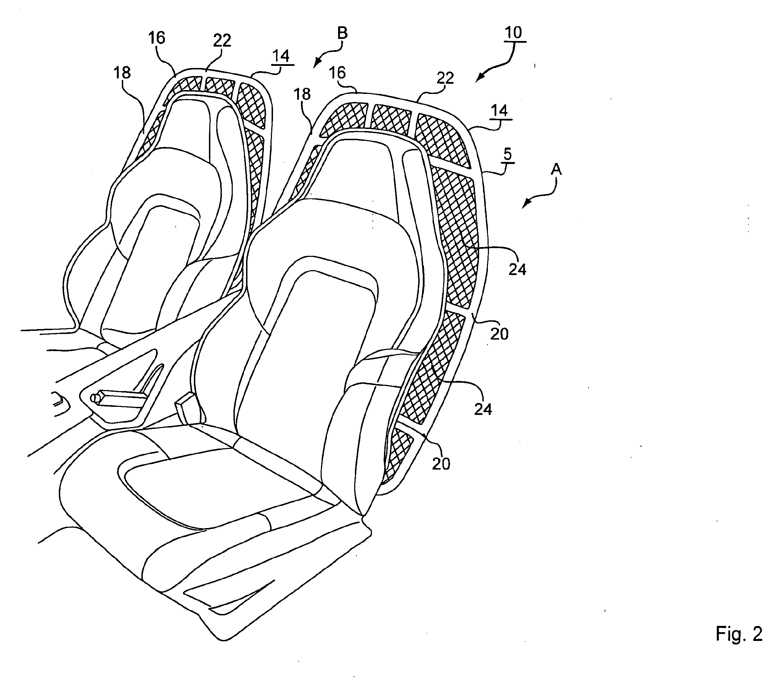

Fig. 2 zeigt in gleicher Perspektive wie Fig. 1a und Fig. 1b die beiden Vordersitze 10 mit aufgestelltem Windschott 14. Jedes Windschott 14 wird durch eine mit einem evakuierbaren Medium befüllbare und in befülltem Zustand gitterartige, freitragende Tragkonstruktion 16 mit einem außen umlaufenden Schlauch 18 sowie jeweils mindestens einem horizontalen und vertikalen Schlauch 20, 22 gebildet. Zwischen den einzelnen Schlauchabschnitten, also innerhalb der durch das Gitter der Tragkonstruktion 16 gebildeten Öffnungen, ist ein Durchbrechungen aufweisendes Gewebe 24, z.B. ein Netz, vorgesehen. Das Gewebe 24 bewirkt das mit dem Windschott 14 beabsichtigte Abhalten von Luftverwirbelungen des Fahrtwindes aus dem Bereich der Vordersitze 10. Die Tragkonstruktion 16 weist im befüllten Zustand, z.B. in einem mit Druckluft befüllten Zustand, eine ausreichende Steifigkeit auf um die einzelnen Gewebeabschnitte 24 ausgebreitet zu halten, so dass das Windschott 14 seine beabsichtigte Wirkung entfaltet.

Das Windschott 14 nimmt im aufgestellten Zustand eine Form an mit der es in einem mit "A" bezeichneten Bereich der Innenkontur des Fahrzeuginnenraums folgt. Bevorzugt legt sich sogar der außen umlaufende Schlauch 18 an einzelne Elemente der Fahrzeuginnenverkleidung, z.B. die Innenverkleidung der sogenannten B-Säule, in dem Bereich A an, so dass die sich dabei ergebende Haftreibung die Steifigkeit des Windschotts 14 günstig unterstützt. Für einem mit "B" bezeichneten Bereich, also den Bereich zwischen den beiden Vordersitzen 10, kann vorgesehen sein (nicht dargestellt), dass die beiden Windschotts 14 asymmetrisch geformt sind und im Bereich B miteinander, insbesondere auch in Höhe der Rückenlehnen und der Kopfstützen, in Berührung kommen. Mit dem aufgestellten Windschott 14 des Nachbarsitzes ergibt sich damit in Fahrzeugmitte, also im Bereich "B", eine geschlossene oder zumindest annähernd geschlossene Fläche.

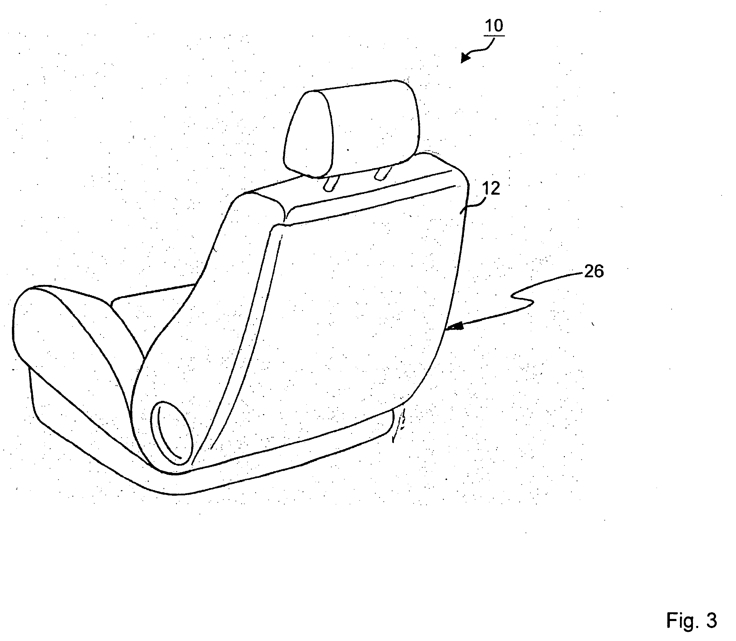

Fig. 3 zeigt in einer rückwärtigen Ansicht einen einzelnen Vordersitz 10 an dem die Erfindung verwirklicht ist, wobei abweichend zu der in Fig. 1a, Fig. 1b gezeigten Ausführungsform eine den rückwärtigen Bereich des Vordersitzes 10 abdeckende Verkleidung 26 als Blende 12 fungiert.

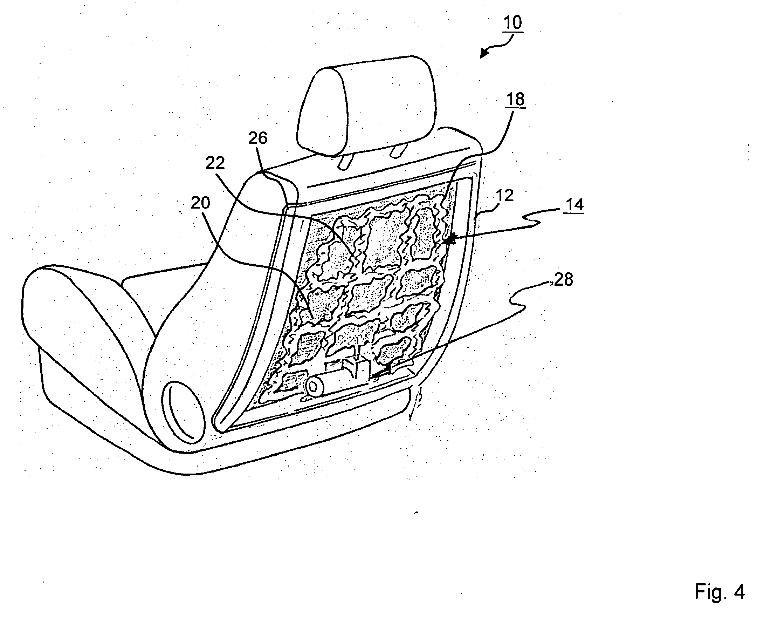

Fig. 4 zeigt in gleicher Perspektive wie Fig. 3 den Vordersitz 10 in einer Ansicht mit "durchsichtig" dargestellter Verkleidung 26, so dass das nach Gebrauch komplett im rückwärtigen Teil des jeweiligen Vordersitzes aufgenommene Windschott 14 sichtbar ist. Von dem Windschott 14 sind die evakuierten Schläuche 18, 20, 22 der Tragkonstruktion 16 erkennbar. Das zwischen den Schlauchabschnitten befindliche Gewebe 24 ist nicht separat dargestellt. Fig. 4 zeigt allerdings noch einen zum Befüllen der Tragkonstruktion 16, also der Schläuche 18, 20, 22 vorgesehenen Kompressor 28, der ebenfalls, mit dem Windschott 14, in Vordersitz 10, insbesondere im Rückenlehnenabschnitt des Vordersitzes 10, angeordnet ist.

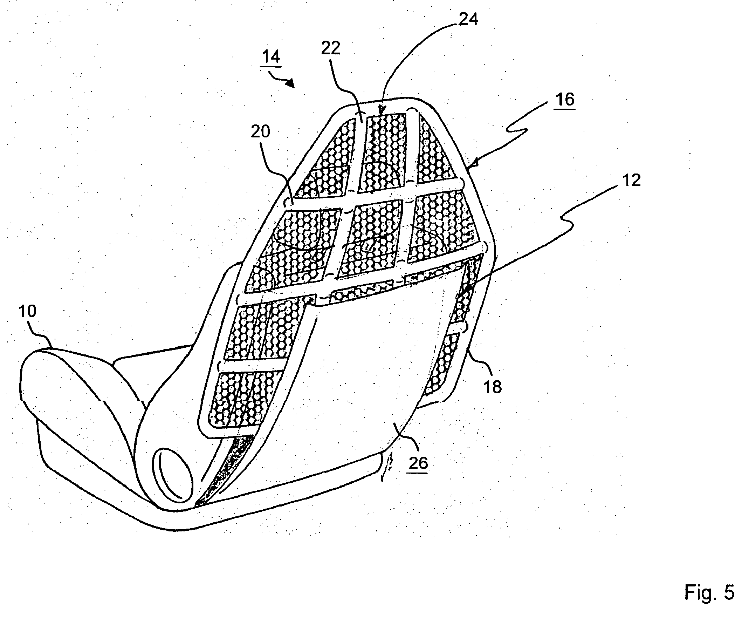

Fig. 5 zeigt in gleicher Perspektive wie Fig. 3 oder Fig. 4 für die Ausführungsform mit einer Einzelblende 12 gemäß Fig. 3 eine Fig. 2 analoge Situation mit aufgestelltem Windschott 14, bei dem also die Tragkonstruktion 16 des Windschotts 14, namentlich die die Tragkonstruktion bildenden Schläuche 18, 20, 22, also der außen umlaufende Schlauch 18 und der oder jeder horizontale bzw. vertikale Schlauch 20, 22, derart mit einem evakuierbaren Medium befüllt ist, dass die Tragkonstruktion 16 die nötige Steifigkeit erhält um die Gewebesegmente 24 im Fahrtwind und gegen die Verwirbelungen des Fahrtwindes ausgebreitet und im wesentlichen aufrecht zu halten.

In Fig. 5 ist des Weiteren erkennbar, dass die Blende 12, also die Verkleidung 26, in ihrem unteren Bereich mit dem jeweiligen Vordersitz 10 gelenkig verbunden ist, so dass die Blende 12 (Verkleidung 26) in Richtung der aufstrebenden Rückenlehne von dieser weg verschwenkbar ist und in dieser Position Raum freigibt aus dem sich das Windschott aus seiner eingezogenen Position (vgl. Fig. 4) entfalten kann.

### Damit lässt sich die Erfindung kurz wie folgt darstellen:

Es wird ein Windschott 14 für ein Cabrioletfahrzeug mit einer zur Befüllung mit einem evakuierbaren Medium vorgesehenen Tragkonstruktion 16 angegeben, bei dem das Windschott 14 und die Tragkonstruktion 16 im nicht aufgestellten Zustand im rückwärtigen Bereich des jeweiligen Vordersitzes 10 des Cabrioletfahrzeugs untergebracht oder unterbringbar sind.

### BEZUGSZEICHENLISTE

- 10: Vordersitz
- 12: Blende
- 14: Windschott
- 16: Tragkonstruktion
- 18: außen umlaufender Schlauch
- 20: horizontaler Schlauch
- 22: vertikaler Schlauch
- 24: Gewebe
- 26: Verkleidung
- 28: Kompressor

## Patentansprüche

1. Windschott (14) für ein Cabrioletfahrzeug mit einer zur Befüllung mit einem evakuierbaren Medium vorgesehenen Tragkonstruktion (16),
**dadurch gekennzeichnet, dass**
das Windschott (14) und die Tragkonstruktion (16) im nicht aufgestellten Zustand im rückwärtigen Bereich des jeweiligen Vordersitzes (10) des Cabrioletfahrzeugs unterbringbar sind.

2. Windschott nach Anspruch 1,
wobei das Windschott (14) und die Tragkonstruktion (16) im jeweiligen Vordersitz (10) hinter zumindest einer sich beim Aufstellen des Windschotts (14) durch Aufblasen der Tragkonstruktion (16) öffnenden Blende (12) angeordnet sind.

3. Windschott nach Anspruch 2,
wobei es sich bei der zumindest einen Blende (12) um sich seitlich öffnende Blenden (12) handelt.

4. Windschott nach Anspruch 2,
wobei es sich bei der zumindest einen Blende (12) um eine eine rückwärtige Verkleidung (26) des jeweiligen Sitzes (10) bildende Blende handelt.

5. Windschott nach einem der Ansprüche 1 bis 4,
wobei die Tragkonstruktion (16) eine aus Schläuchen (18, 20, 22) gebildete gitterartige Tragkonstruktion (16) ist.

6. Windschott nach Anspruch 5,
wobei in zumindest einzelnen Schläuchen (18, 20, 22) der Tragkonstruktion (16) eine elastische Rückholeinrichtung, insbesondere ein Gummiband, vorgesehen ist.

7. Windschott nach einem der vorangehenden Ansprüche,
wobei die Außenkontur des aufgestellten Windschotts (14) im der Fahrzeugseite zugewandten Bereich an die Innenkontur des Fahrzeuginnenraums angepasst ist.

8. Windschott nach Anspruch 7,
wobei die Außenkontur des aufgestellten Windschotts (14) im der Fahrzeugmitte zugewandten Bereich derart vorgesehen ist, dass sich mit dem aufgestellten Windschott (14) des Nachbarsitzes in Fahrzeugmitte eine geschlossene oder zumindest annähernd geschlossene Fläche ergibt.

9. Windschott nach einem oder mehreren der vorangehenden Ansprüche,
wobei zum Einleiten und/oder evakuieren des evakuierbaren Mediums ein insbesondere im jeweiligen Vordersitz angeordneter Kompressor (28) vorgesehen ist.

10. Windschott nach einem oder mehreren der vorangehenden Ansprüche,
wobei als evakuierbares Medium Druckluft vorgesehen ist.

11. Cabrioletfahrzeug mit einem Windschott (14) nach einem oder mehreren der vorangehenden Ansprüche.
